# FASCICULE DE BREVET EUROPEEN

(11) **EP 3 746 318 B1**
(45) Date de publication et mention de la délivrance du brevet: **30.03.2022**
(21) Numéro de dépôt: 19709084.8
(22) Date de dépôt: 29.01.2019
(51) Int. Cl.: B60H 1/00, B60H 1/32

(54) **CIRCUIT DE FLUIDE RÉFRIGÉRANT**
KÄLTEMITTELKREISLAUF
REFRIGERANT FLUID CIRCUIT

(30) Priorité: 31.01.2018 FR 1850833; 27.09.2018 FR 1858859
(43) Date de publication de la demande: 09.12.2020
(73) Titulaire: Valeo Systemes Thermiques, 78320 Le Mesnil-Saint-Denis (FR)
(72) Inventeur: BENOUALI, Jugurtha, 78322 LE MESNIL SAINT-DENIS CEDEX (FR)
(74) Mandataire: Valeo Systèmes Thermiques
(86) Numéro de dépôt international: PCT/FR2019/050199
(87) Numéro de publication internationale: WO 2019/150039

(56) Documents cités:
- EP-A1- 3 273 181
- DE-A1-102016 201 835
- US-A1- 2004 060 312
- US-A1- 2013 298 583

## Description

Le domaine de la présente invention est celui des circuits de fluide réfrigérant pour véhicule, notamment pour véhicule automobile.

Les véhicules automobiles sont couramment équipés d'un circuit de fluide réfrigérant utilisé pour chauffer ou refroidir différentes zones ou différents composants du véhicule. Il est notamment connu d'utiliser ce circuit de fluide réfrigérant pour traiter thermiquement un flux d'air envoyé dans l'habitacle du véhicule équipé d'un tel circuit.

Dans une autre application de ce circuit, il est connu de l'utiliser pour refroidir un élément d'une chaîne de traction électrique du véhicule, comme un dispositif de stockage électrique, ce dernier étant utilisé pour fournir une énergie à un moteur électrique capable de mettre en mouvement le véhicule. Le circuit de fluide réfrigérant fournit ainsi l'énergie capable de refroidir le dispositif de stockage électrique pendant son utilisation en phases de roulage. Le circuit de fluide réfrigérant est ainsi dimensionné pour refroidir cet élément de la chaîne de traction électrique du véhicule pour des températures qui restent modérées

Un tel circuit de fluide réfrigérant est connu par exemple du document DE 10 2016 201835 A1.

Il est également connu de charger le dispositif de stockage électrique du véhicule en le raccordant pendant plusieurs heures au réseau électrique domestique. Cette technique de charge longue permet de maintenir la température du dispositif de stockage électrique en dessous d'un certain seuil, ce qui permet de se passer de tout système de refroidissement du dispositif de stockage électrique.

Une nouvelle technique de charge a fait son apparition récemment. Elle consiste à charger le dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique qu'il convient de traiter. Par ailleurs, il faut considérer la possibilité que les occupants du véhicule restent à l'intérieur du véhicule tout ou partie du temps de charge mentionné ci-dessus. Il faut alors également traiter thermiquement l'habitacle pendant cette charge rapide pour maintenir des conditions de confort acceptables par les occupants, notamment quand la température extérieure au véhicule dépasse 30°C. Ces deux demandes en refroidissement impliquent un dimensionnement du système qui le rend peu compatible avec les contraintes des véhicules automobiles actuels, notamment les véhicules mus par un moteur électrique.

Le problème technique réside donc dans la capacité d'une part à dissiper les calories générées par le dispositif de stockage électrique pendant la charge rapide, en traitant thermiquement au moins un élément de la chaîne de traction électrique du véhicule et d'autre part à refroidir l'habitacle, tant en limitant la consommation et/ou l'encombrement et/ou les nuisances sonores d'un système capable de remplir simultanément ces deux fonctions.

L'invention s'inscrit dans ce contexte et propose une solution technique qui concoure à l'atteinte de ce double objectif, qui est par exemple de maintenir le dispositif de stockage électrique en-dessous d'une température seuil pendant une charge rapide et refroidir l'habitacle du véhicule, au moyen d'un circuit de fluide réfrigérant astucieusement conçu pour faire fonctionner indépendamment deux échangeurs de chaleur dédiés au traitement thermique d'un élément de la chaîne de traction électrique, selon la puissance de refroidissement requise au niveau dudit élément et au niveau de l'habitacle.

L'invention a donc pour objet un circuit de fluide réfrigérant pour véhicule, le circuit comprenant une conduite principale, une première branche et une deuxième branche, la première branche et la deuxième branche étant disposées en parallèle l'une par rapport à l'autre en étant disposées chacune en série de la conduite principale, la conduite principale comprenant au moins un premier échangeur thermique configuré pour être traversé par un flux d'air extérieur à un habitacle du véhicule, la première branche comprenant au moins un premier organe de détente, un premier échangeur de chaleur configuré pour traiter thermiquement au moins un élément d'une chaîne de traction électrique du véhicule et un premier dispositif de compression, la deuxième branche comprenant au moins un deuxième organe de détente, un deuxième échangeur thermique configuré pour traiter thermiquement un flux d'air intérieur destiné à être envoyé dans l'habitacle du véhicule et un deuxième dispositif de compression indépendant du premier dispositif de compression, caractérisé en ce que le circuit comprend un deuxième échangeur de chaleur configuré pour traiter thermiquement l'élément de la chaîne de traction électrique du véhicule, le deuxième échangeur de chaleur étant disposé en parallèle du deuxième échangeur thermique.

Le circuit est doté de deux dispositifs de compression disposés en parallèle. Ces deux dispositifs de compression sont localisés chacun, du point de vue du sens de circulation du fluide réfrigérant, en aval de l'un des échangeurs de chaleur : le premier dispositif de compression est en aval du premier échangeur de chaleur ; le deuxième dispositif de compression est en aval du deuxième échangeur de chaleur.

En sortie du premier échangeur de chaleur, le niveau de basse pression du fluide réfrigérant peut être différent par rapport au niveau de basse pression en sortie du deuxième échangeur de chaleur. Le deuxième dispositif de compression étant à la fois en aval du deuxième échangeur de chaleur et du deuxième échangeur thermique qui est parallèle au deuxième échangeur de chaleur, le niveau de basse pression en sortie du deuxième échangeur de chaleur est imposé par le deuxième échangeur thermique et par le deuxième échangeur de chaleur. Le niveau de basse pression en sortie du premier échangeur de chaleur n'est en revanche imposé que par le premier échangeur de chaleur. La séparation et la mise en parallèle du premier échangeur de chaleur et du deuxième échangeur de chaleur pour le traitement thermique de l'élément de la chaîne de traction électrique du véhicule donne plus de flexibilité à ce traitement thermique. Il est possible de les faire fonctionner l'un et/ou l'autre des échangeurs de chaleur, adaptant ainsi la puissance aux besoins de l'élément de la chaîne de traction électrique du véhicule.

La séparation et la mise en parallèle du premier échangeur de chaleur et du deuxième échangeur de chaleur permet par ailleurs une adaptation des débits et de la perte de charge des composants, en particulier du premier échangeur de chaleur et du deuxième échangeur de chaleur, aux besoins du circuit.

Le premier échangeur de chaleur et le deuxième échangeur de chaleur sont configurés pour traiter thermiquement l'élément de la chaîne de traction électrique du véhicule comme par exemple un dispositif de stockage électrique du véhicule. Ils sont ainsi spécialement dédiés à cet élément et n'ont pas pour fonction de refroidir un autre composant. Le premier échangeur de chaleur et le deuxième échangeur de chaleur échangent chacun des calories entre le fluide réfrigérant et l'élément de la chaîne de traction électrique du véhicule, soit directement, c'est-à-dire par convection entre le premier échangeur de chaleur et l'élément de la chaîne de traction électrique du véhicule, et le deuxième échangeur de chaleur et l'élément de la chaîne de traction électrique du véhicule, soit indirectement via une boucle de liquide caloporteur, cette dernière étant destinée à transporter les calories de l'élément de la chaîne de traction électrique du véhicule vers le premier échangeur de chaleur et/ou le deuxième échangeur de chaleur.

On comprend donc que le premier échangeur de chaleur et le deuxième échangeur de chaleur peuvent être au contact dudit élément. Dans un tel cas, le refroidissement de l'élément de la chaîne de traction électrique du véhicule est direct. De manière alternative, le refroidissement de l'élément de la chaîne de traction électrique du véhicule peut être indirect.

Le premier dispositif de compression et le deuxième dispositif de compression sont par exemple des compresseurs, et l'invention trouve une application toute particulière lorsque les compresseurs sont des compresseurs électriques à cylindrée fixe et à vitesse variable. Il est ainsi possible de contrôler la puissance thermique du circuit selon l'invention.

Le deuxième dispositif de compression est indépendant du premier dispositif de compression en ce sens que l'un des dispositifs de compression peut être actif alors que l'autre dispositif de compression est inactif, ou ils peuvent encore tourner simultanément à des vitesses de rotation différentes. Il est possible de faire fonctionner seulement l'un des deux dispositifs de compression quand le besoin thermique est limité, par exemple quand le circuit fonctionne en mode refroidissement de l'habitacle pendant une phase de roulage classique. L'invention permet également de mettre en fonctionnement les deux dispositifs de compression quand une phase de charge rapide du dispositif de stockage électrique est activée, alors que les occupants restent dans le véhicule et qu'il convient alors de refroidir l'habitacle.

Cette organisation évite de dimensionner des composants, notamment le dispositif de compression, pour des phases d'utilisation dites de charge rapide finalement courtes comparées aux phases d'utilisation dites de roulage, où le besoin énergétique est plus faible.

Cette organisation du circuit permet également de limiter les nuisances acoustiques, en faisant fonctionner deux dispositifs de compression à des vitesses inférieures à un seuil acoustique acceptable, ce qui ne serait pas le cas avec un unique dispositif de compression qui imposerait alors une vitesse de rotation très élevée pendant la charge rapide, et par conséquent une nuisance acoustique pour les occupants restés dans le véhicule.

Le fluide réfrigérant est par exemple un fluide sous-critique, tel que celui connu sous la référence R134A ou R1234yf. Alternativement, le fluide peut être super-critique, tel que le dioxyde de carbone dont la référence est R744. Le circuit de fluide réfrigérant selon l'invention est un circuit fermé qui met en œuvre un cycle thermodynamique.

La première branche est en parallèle de la deuxième branche, et ce vu du fluide réfrigérant.

Le premier organe de détente est disposé sur la première branche du circuit. Le premier organe de détente est couplé au premier échangeur de chaleur. Le deuxième organe de détente est disposé sur la deuxième branche du circuit. Le deuxième organe de détente est au moins couplé au deuxième échangeur thermique. Il peut être couplé à la fois au deuxième échangeur thermique et au deuxième échangeur de chaleur, ou être uniquement couplé au deuxième échangeur thermique.

Le premier organe de détente et le deuxième organe de détente sont par exemple des détendeurs électroniques ou thermostatiques. Ils sont équipés ou non d'une fonction d'arrêt. Lorsque la fonction d'arrêt n'équipe pas l'un et/ou l'autre du premier organe de détente et du deuxième organe de détente, la fonction d'arrêt est déportée en amont dudit organe de détente considéré.

Le premier échangeur thermique peut être installé en face avant du véhicule. Ce premier échangeur thermique peut ainsi être utilisé comme condenseur, ou refroidisseur de gaz dans le cas d'un fluide super-critique, ou comme évaporateur quand le circuit fonctionne en pompe à chaleur.

Le deuxième échangeur thermique peut être installé dans une installation de ventilation, de chauffage, et/ou de climatisation. Ce deuxième échangeur thermique peut ainsi être utilisé comme évaporateur afin de refroidir le flux d'air envoyé dans l'habitacle du véhicule.

Selon un aspect de l'invention, une troisième branche comprend le deuxième échangeur de chaleur et un troisième organe de détente disposé en parallèle du deuxième organe de détente. Alors, le premier organe de détente est dédié à la détente du fluide réfrigérant alimentant le premier échangeur de chaleur, le deuxième organe de détente est dédié à la détente du fluide réfrigérant alimentant le deuxième échangeur thermique et le troisième organe de détente est dédié à la détente du fluide réfrigérant alimentant le deuxième échangeur de chaleur.

Le troisième organe de détente est par exemple un détendeur électronique ou thermostatique tel que précédemment décrit pour le premier organe de détente et le deuxième organe de détente.

Selon un aspect de l'invention, un dispositif de raccordement avec fonction d'arrêt raccorde un premier point de raccordement à un deuxième point de raccordement, le premier point de raccordement étant situé dans la première branche entre le premier échangeur de chaleur et le premier dispositif de compression et le deuxième point de raccordement étant situé dans la deuxième branche entre le deuxième échangeur thermique et le deuxième dispositif de compression. Le dispositif de raccordement avec fonction d'arrêt est par exemple une conduite additionnelle s'étendant entre le premier point de raccordement et le deuxième point de raccordement et munie d'une vanne d'arrêt ou de tout autre système permettant l'ouverture et la fermeture de ladite conduite additionnelle. Le dispositif de raccordement avec fonction d'arrêt est ainsi apte à mettre en œuvre un raccordement entre la première branche et la deuxième branche. Le dispositif de raccordement avec fonction d'arrêt n'a pas vocation à réguler le débit de fluide réfrigérant, mais autorise ou non la circulation du fluide réfrigérant entre la première branche et la deuxième branche, depuis le premier point de raccordement vers le deuxième point de raccordement.

Le premier point de raccordement et le deuxième point de raccordement sont des zones du circuit qui relient la première branche à la deuxième branche. Le dispositif de raccordement avec fonction d'arrêt est disposé entre le premier point de raccordement et le deuxième point de raccordement. Le dispositif de raccordement avec fonction d'arrêt peut être soit ouvert soit fermé.

Le passage de fluide réfrigérant de la première branche à la deuxième branche est autorisé lorsque le dispositif de raccordement avec fonction d'arrêt est ouvert. L'ouverture du dispositif de raccordement avec fonction d'arrêt permet une disposition en série du premier dispositif de compression avec le deuxième échangeur thermique et du premier dispositif de compression avec le deuxième dispositif de compression.

Le passage de fluide réfrigérant de la première branche à la deuxième branche est bloqué lorsque le dispositif de raccordement avec fonction d'arrêt est fermé. La circulation du fluide réfrigérant dans la première branche est alors réalisée strictement en parallèle à la circulation du fluide réfrigérant dans la deuxième branche.

Selon un aspect de l'invention, la conduite principale s'étend entre un troisième point de raccordement et un quatrième point de raccordement, la troisième branche s'étend entre un cinquième point de raccordement et un sixième point de raccordement, le cinquième point de raccordement est situé entre le quatrième point de raccordement et le deuxième organe de détente et le sixième point de raccordement est situé entre le deuxième point de raccordement et le deuxième échangeur thermique. Le troisième point de raccordement et le quatrième point de raccordement sont des zones du circuit où la conduite principale se divise. Du point de vue du sens de circulation du fluide réfrigérant, la première branche et la deuxième branche convergent au troisième point de raccordement pour former la conduite principale. La conduite principale diverge au quatrième point de raccordement pour former la première branche et la deuxième branche.

La troisième branche émane de la deuxième branche au niveau du cinquième point de raccordement. La troisième branche rejoint la deuxième branche au niveau du sixième point de raccordement. Le deuxième échangeur de chaleur est disposé en parallèle du deuxième échangeur thermique.

Selon un aspect alternatif de l'invention, la conduite principale s'étend entre un troisième point de raccordement et un quatrième point de raccordement, le cinquième point de raccordement est situé entre le quatrième point de raccordement et le premier organe de détente et le sixième point de raccordement est situé entre le deuxième point de raccordement et le deuxième échangeur thermique. La troisième branche émane de la première branche au niveau du cinquième point de raccordement. La troisième branche rejoint la deuxième branche au niveau du sixième point de raccordement. Le deuxième échangeur de chaleur est en parallèle du deuxième échangeur thermique.

Selon un aspect de l'invention, le circuit comprend un premier échangeur de chaleur interne à deux passes et un deuxième échangeur de chaleur interne à deux passes, une première passe du premier échangeur de chaleur interne étant en série d'une première passe du deuxième échangeur de chaleur interne et disposées entre le premier échangeur thermique et le quatrième point de raccordement, une deuxième passe du premier échangeur de chaleur interne étant située entre le premier échangeur de chaleur et le premier point de raccordement, une deuxième passe du deuxième échangeur de chaleur interne étant située entre le deuxième échangeur thermique et le deuxième point de raccordement. Dans cette configuration, le fluide réfrigérant qui circule dans la première passe du premier échangeur de chaleur interne puis dans la première passe du deuxième échangeur de chaleur interne est à haute pression et moyenne température. Il transfert ses calories au fluide réfrigérant étant dans un état différent, en l'occurrence à basse pression et basse température, circulant dans la première branche et dans la deuxième branche, respectivement au niveau de la deuxième passe du premier échangeur de chaleur interne et au niveau de la deuxième passe du deuxième échangeur de chaleur interne.

Selon un aspect de l'invention, le circuit comprend un dispositif de contrôle configuré pour contrôler l'ouverture d'au moins le premier organe de détente et le dispositif de raccordement avec fonction d'arrêt. Avantageusement, le dispositif de contrôle est configuré pour contrôler le deuxième organe de détente. Avantageusement encore, le dispositif de contrôle est configuré pour contrôler le troisième organe de détente.

Selon un aspect de l'invention, le premier échangeur de chaleur et le deuxième échangeur de chaleur sont de performance thermique équivalente. On entend par « performance thermique équivalente » le fait que le premier échangeur de chaleur et le deuxième échangeur de chaleur sont par exemple des modèles identiques, à savoir de même taille, de même forme et conçus avec les mêmes matériaux et selon les mêmes technologies.

Selon un aspect alternatif de l'invention, le deuxième échangeur de chaleur a une performance thermique plus faible que la performance thermique du premier échangeur de chaleur. Le premier échangeur de chaleur réalise un échange thermique en utilisant le fluide réfrigérant à basse pression et à basse température, ce fluide réfrigérant étant aspiré par le premier dispositif de compression. Le deuxième échangeur de chaleur réalise un échange thermique en utilisant le fluide réfrigérant à basse pression et à basse température, ce fluide réfrigérant pouvant être aspiré par le deuxième dispositif de compression conjointement avec le fluide réfrigérant à basse pression et à basse température issu du deuxième échangeur thermique. Le débit du fluide réfrigérant dans le premier échangeur de chaleur est plus important que dans le deuxième échangeur de chaleur. Dès lors, la performance thermique du deuxième échangeur de chaleur est partagée avec la performance thermique du deuxième échangeur thermique. Le deuxième échangeur de chaleur a alors vocation à apporter un complément de puissance thermique au premier échangeur de chaleur. Dans un exemple de réalisation, le premier échangeur de chaleur dispense 67% (plus ou moins 5%) de la puissance thermique dans la boucle de liquide caloporteur, et le deuxième échangeur de chaleur en dispense 33% (plus ou moins 5%).

L'invention concerne également un système de traitement thermique d'un véhicule comprenant le circuit de fluide réfrigérant tel que précédemment décrit et une boucle de liquide caloporteur couplée thermiquement au circuit de fluide réfrigérant par l'intermédiaire au moins du premier échangeur de chaleur et du deuxième échangeur de chaleur. Le premier échangeur de chaleur et le deuxième échangeur de chaleur peuvent être soit en série l'un par rapport à l'autre soit en parallèle dans la boucle de liquide caloporteur. La boucle de liquide caloporteur est dédiée au traitement thermique de l'élément de la chaîne de traction électrique du véhicule.

Le premier échangeur de chaleur et le deuxième échangeur de chaleur sont des échangeurs de chaleur bi fluide, puisque destinés à être parcourus à la fois par le fluide réfrigérant du circuit et par le liquide caloporteur de la boucle.

Selon un aspect de l'invention, la boucle de liquide caloporteur comprend un troisième échangeur thermique qui couple thermiquement le liquide caloporteur à l'élément de la chaîne de traction électrique du véhicule. Ainsi, le traitement thermique de l'élément de la chaîne de traction électrique est réalisé par le premier échangeur de chaleur et le deuxième échangeur de chaleur, par l'intermédiaire du troisième échangeur thermique.

L'élément de la chaîne de traction électrique est par exemple un dispositif de stockage électrique du véhicule. L'élément de la chaîne de traction électrique peut également correspondre à un moteur électrique, une unité de contrôle ou de commande électronique ou encore un système de freinage du véhicule.

Selon un aspect de l'invention, le premier échangeur de chaleur et le deuxième échangeur de chaleur sont disposés en parallèle l'un par rapport à l'autre sur la boucle de liquide caloporteur.

D'autres caractéristiques, détails et avantages de l'invention ressortiront plus clairement à la lecture de la description donnée ci-après à titre indicatif en relation avec des dessins dans lesquels :
- la figure 1 est une vue schématique du circuit selon l'invention, dans un premier mode de réalisation,
- les figures 2 à 6 montrent le circuit objet du premier mode de réalisation exploité selon différents modes de fonctionnement consistant à refroidir un habitacle du véhicule et/ou un élément d'une chaîne de traction électrique du véhicule,
- la figure 7 est une vue schématique du circuit selon l'invention, dans un deuxième mode de réalisation.

Il faut tout d'abord noter que les figures exposent l'invention de manière détaillée pour mettre en œuvre l'invention, lesdites figures pouvant bien entendu servir à mieux définir l'invention, le cas échéant. Ces figures sont des représentations schématiques qui illustrent comment est réalisé le circuit, ce qui le compose et comment le fluide réfrigérant circule en son sein. En particulier, le circuit selon l'invention comprend principalement deux dispositifs de compression du fluide réfrigérant, deux échangeurs de chaleur couplés à une boucle de liquide caloporteur, deux échangeurs thermiques, deux organes de détentes et des canalisations reliant chacun de ces composants.

Les termes amont et aval employés dans la description qui suit se réfèrent au sens de circulation du fluide considéré, c'est-à-dire le fluide réfrigérant, un flux d'air intérieur envoyé vers un habitacle du véhicule ou un flux d'air extérieur à l'habitacle du véhicule. Le fluide réfrigérant est symbolisé par une flèche qui illustre le sens de circulation de ce dernier dans la canalisation considérée. Les traits pleins illustrent une portion de circuit où le fluide réfrigérant circule, tandis que les traits pointillés montrent une absence de circulation du fluide réfrigérant. Le fluide réfrigérant à haute pression est représenté par des flèches pleines. Le fluide réfrigérant à basse pression est représenté par des flèches évidées.

Les dénominations « premier/ère », « deuxième », etc... n'ont pas vocation à indiquer un niveau de hiérarchisation ou ordonnancer les termes qu'ils accompagnent. Ces dénominations permettent de distinguer les termes qu'ils accompagnent et peuvent être interverti sans que soit porté atteinte à la portée de l'invention.

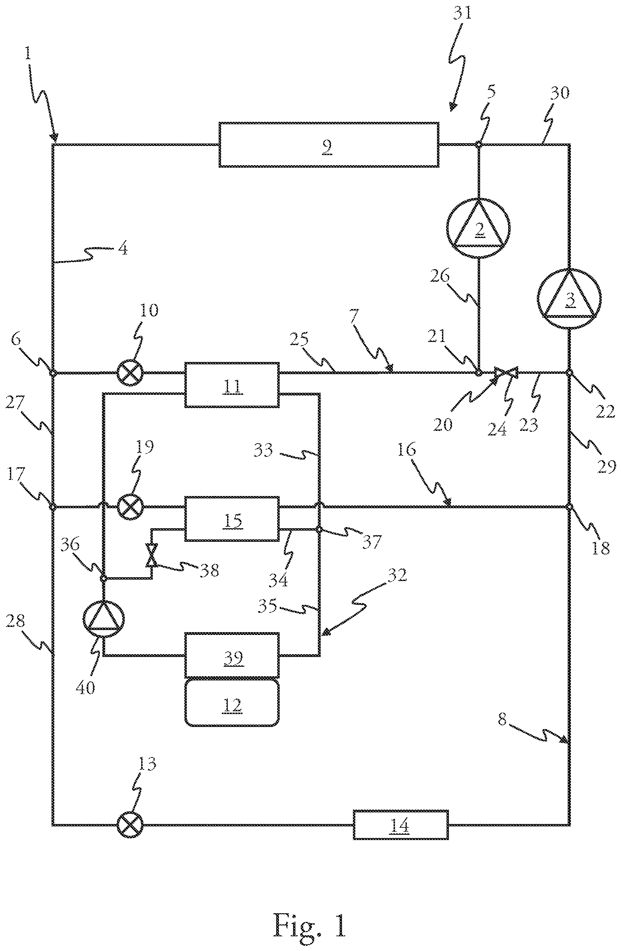

La figure 1 montre ainsi un circuit 1 de fluide réfrigérant selon un premier mode de réalisation. Ce circuit 1 est une boucle fermée où un fluide réfrigérant est mis en circulation par un premier dispositif de compression 2 et/ou par un deuxième dispositif de compression 3. On notera que ces dispositifs de compression 2, 3 peuvent prendre la forme d'un compresseur électrique, c'est-à-dire un compresseur qui comprend un mécanisme de compression, un moteur électrique et éventuellement un contrôleur. Le mécanisme de rotation est mis en rotation par le moteur électrique dont la vitesse de rotation est placée sous la dépendance du contrôleur, celui-ci pouvant être externe ou interne au dispositif de compression concerné.

Selon le premier mode de réalisation illustré, le circuit 1 comprend une conduite principale 4, une première branche 7 et une deuxième branche 8. La conduite principale 4 s'étend entre un troisième point de raccordement 5 et un quatrième point de raccordement 6. La première branche 7 s'étend entre le quatrième point de raccordement 6 et le troisième point de raccordement 5. La deuxième branche 8 s'étend entre le quatrième point de raccordement 6 et le troisième point de raccordement 5. La première branche 7 et la deuxième branche 8 sont disposées en parallèle l'une par rapport à l'autre. Elles sont par ailleurs disposées chacune en série de la conduite principale 4.

La conduite principale 4 comprend un premier échangeur thermique 9. Le premier échangeur thermique 9 est configuré pour être traversé par un flux d'air extérieur à un habitacle du véhicule. Il est par exemple disposé en front de véhicule pour être alimenté par ce flux d'air extérieur.

La première branche 7 comprend un premier organe de détente 10, un premier échangeur de chaleur 11 et le premier dispositif de compression 2. Le premier échangeur de chaleur 11 est configuré pour traiter thermiquement au moins un élément 12 d'une chaîne de traction électrique du véhicule. Le premier organe de détente 10 est disposé entre le quatrième point de raccordement 6 et le premier échangeur de chaleur 11. Le premier dispositif de compression 2 est situé entre le premier échangeur de chaleur 11 et le troisième point de raccordement 5.

La deuxième branche 8 comprend un deuxième organe de détente 13, un deuxième échangeur thermique 14 et le deuxième dispositif de compression 3. Le deuxième échangeur thermique 14 est configuré pour traiter thermiquement un flux d'air intérieur destiné à être envoyé dans l'habitacle du véhicule. Le deuxième dispositif de compression 3 est indépendant du premier dispositif de compression 2. Le deuxième organe de détente 13 est disposé entre le quatrième point de raccordement 6 et le deuxième échangeur thermique 14. Le deuxième dispositif de compression 3 est disposé entre le deuxième échangeur thermique 14 et le troisième point de raccordement 5.

Le circuit 1 comprend un deuxième échangeur de chaleur 15. Le deuxième échangeur de chaleur 15 est configuré pour traiter thermiquement l'élément 12 de la chaîne de traction électrique du véhicule. Le deuxième échangeur de chaleur 15 est disposé en parallèle du deuxième échangeur thermique 14. En l'espèce, le deuxième échangeur de chaleur 15 est disposé dans une troisième branche 16.

La troisième branche 16 s'étend entre un cinquième point de raccordement 17 et un sixième point de raccordement 18. Le sixième point de raccordement 18 est situé dans la deuxième branche 8, entre le deuxième échangeur thermique 14 et le deuxième dispositif de compression 3. Dans l'exemple décrit en figure 1, le cinquième point de raccordement 17 est raccorde la troisième branche 16 à la deuxième branche 8.

Dans le premier mode de réalisation décrit à la figure 1, le circuit 1 comprend un troisième organe de détente 19. Le troisième organe de détente 19 est disposé dans la troisième branche 16, entre le cinquième point de raccordement 17 et le deuxième échangeur de chaleur 15.

Le circuit 1 comprend un dispositif de raccordement avec fonction d'arrêt 20. Ce dispositif de raccordement avec fonction d'arrêt 20 peut être soit ouvert soit fermé. Le dispositif de raccordement avec fonction d'arrêt 20 raccorde un premier point de raccordement 21 à un deuxième point de raccordement 22. Dans l'exemple de la figure 1, le dispositif de raccordement avec fonction d'arrêt 20 prend la forme d'une conduite additionnelle 23 munie d'une vanne d'arrêt 24 qui peut être soit ouverte soit fermée.

Le premier point de raccordement 21 est situé dans la première branche 7 entre le premier échangeur de chaleur 11 et le premier dispositif de compression 2. Le deuxième point de raccordement 22 est situé dans la deuxième branche 8 entre le deuxième échangeur thermique 14 et le deuxième dispositif de compression 3.

Dès lors, sur la première branche 7, on trouve successivement dans le sens de circulation du fluide réfrigérant, le quatrième point de raccordement 6, le premier organe de détente 10, le premier échangeur de chaleur 11, le premier point de raccordement 21, le premier dispositif de compression 2 et le troisième point de raccordement 5. La première branche 7 comprend ainsi deux parties : une première partie 25 entre le quatrième point de raccordement 6 et le premier point de raccordement 21 et une deuxième partie 26 entre le premier point de raccordement 21 et le troisième point de raccordement 5. La première partie 25 comprend le premier organe de détente 10 et le premier échangeur de chaleur 11. La deuxième partie 26 comprend le premier dispositif de compression 2.

Sur la deuxième branche 8, on trouve successivement dans le sens de circulation du fluide réfrigérant, le quatrième point de raccordement 6, le cinquième point de raccordement 17, le deuxième organe de détente 13, le deuxième échangeur thermique 14, le sixième point de raccordement 18, le deuxième point de raccordement 22, le deuxième dispositif de compression 3 et le troisième point de raccordement 5. La deuxième branche 8 comprend ainsi quatre portions : une première portion 27 entre le quatrième point de raccordement 6 et le cinquième point de raccordement 17, une deuxième portion 28 entre le cinquième point de raccordement 17 et le sixième point de raccordement 18, une troisième portion 29 entre le sixième point de raccordement 18 et le deuxième point de raccordement 22, et une quatrième portion 30 entre le deuxième point de raccordement 22 et le troisième point de raccordement 5. La deuxième portion 28 comprend le deuxième organe de détente 13 et le deuxième échangeur thermique 14. La quatrième portion 30 comprend le deuxième dispositif de compression 3.

Le circuit 1 de fluide réfrigérant est inclus dans un système de traitement thermique 31 du véhicule. Le système de traitement thermique 31 d'un véhicule comprend le circuit 1 de fluide réfrigérant et une boucle 32 de liquide caloporteur. La boucle 32 de liquide caloporteur est couplée thermiquement au circuit 1 de fluide réfrigérant par l'intermédiaire du premier échangeur de chaleur 11 et du deuxième échangeur de chaleur 15.

Le premier échangeur de chaleur 11 et le deuxième échangeur de chaleur 15 sont disposés en parallèle l'un par rapport à l'autre sur la boucle 32 de liquide caloporteur. Comme précédemment indiqué, ils sont également disposés en parallèle l'un par rapport à l'autre sur le circuit 1 de fluide réfrigérant.

La boucle 32 de liquide caloporteur comprend un premier conduit 33, un deuxième conduit 34 et un troisième conduit 35. Le premier conduit 33 est parallèle au deuxième conduit 34. Le premier conduit 33 et le deuxième conduit 34 s'étendent entre un premier point de jonction 36 et un deuxième point de jonction 37. Le premier conduit 33 et le deuxième conduit 34 sont chacun disposés en série du troisième conduit 35. Le troisième conduit 35 s'étend entre le deuxième point de jonction 37 et le premier point de jonction 36. Du point de vue du sens de circulation du liquide caloporteur, le premier point de jonction 36 est une zone de divergence qui sépare le troisième conduit 35 en deux, d'une part le premier conduit 33 et d'autre part le deuxième conduit 34. Le deuxième point de jonction 37 est une zone de convergence où le premier conduit 33 et le deuxième conduit 34 se rejoignent pour former le troisième conduit 35.

Sur le deuxième conduit 34 un système d'arrêt 38 est disposé entre le premier point de jonction 36 et le deuxième échangeur de chaleur 15. Le système d'arrêt 38 peut être soit ouvert soit fermé.

Sur le troisième conduit 35, la boucle 32 de liquide caloporteur comprend un troisième échangeur thermique 39. Le troisième échangeur thermique 39 couple thermiquement le liquide caloporteur à l'élément 12 de la chaîne de traction électrique du véhicule. Dans l'exemple de la figure 1, l'élément 12 de la chaîne de traction électrique du véhicule est par exemple au moins un dispositif de stockage électrique.

Le troisième conduit 35 comprend un dispositif de mise en circulation 40 du liquide caloporteur. Le dispositif de mise en circulation 40 du liquide caloporteur est disposé entre le troisième échangeur thermique 39 et le premier point de jonction 36.

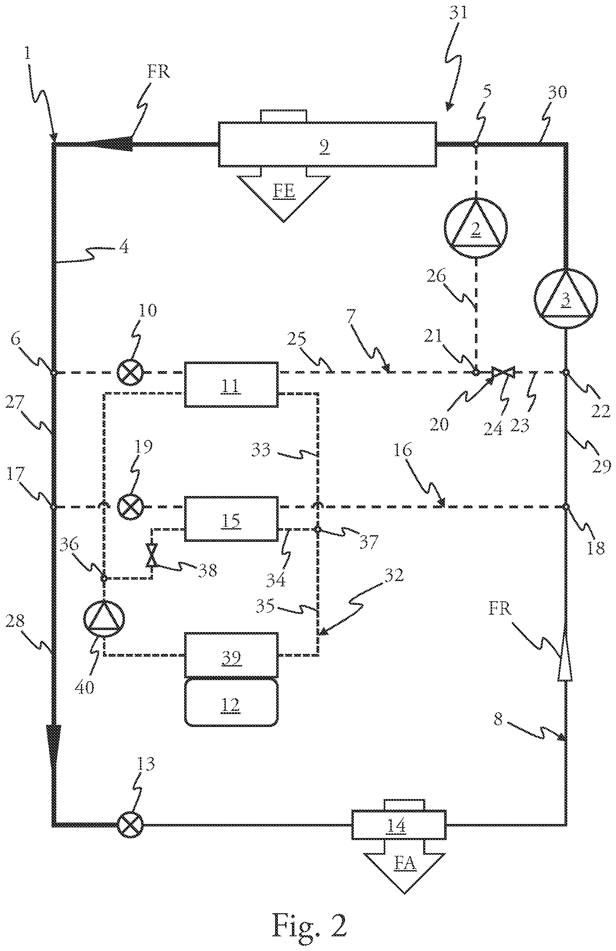

Les figures 2 à 6 montrent le circuit 1 de fluide réfrigérant FR selon le premier mode de réalisation dans des modes de fonctionnement différents. Selon les modes de fonctionnement présentés, les puissances de refroidissement requises au niveau de l'élément 12 de la chaîne de traction électrique du véhicule et/ou de l'habitacle varient. Dès lors, l'un et/ou l'autre du premier dispositif de compression 2 et deuxième dispositif de compression 3 sont sollicités, tout comme l'un et/ou l'autre du premier échangeur de chaleur 11, du deuxième échangeur de chaleur 15 et du deuxième échangeur thermique 14. Sur le circuit 1 de fluide réfrigérant FR d'une part, et sur la boucle 32 de liquide caloporteur d'autre part, le premier organe de détente 10, le deuxième organe de détente 13, le troisième organe de détente 19, le dispositif de raccordement avec fonction d'arrêt 20 et le système d'arrêt 38 sont ou non fermés. A noter que dans le premier mode de réalisation, le premier organe de détente 10, le deuxième organe de détente 13 et le troisième organe de détente 19 ont une fonction d'arrêt intégrée.

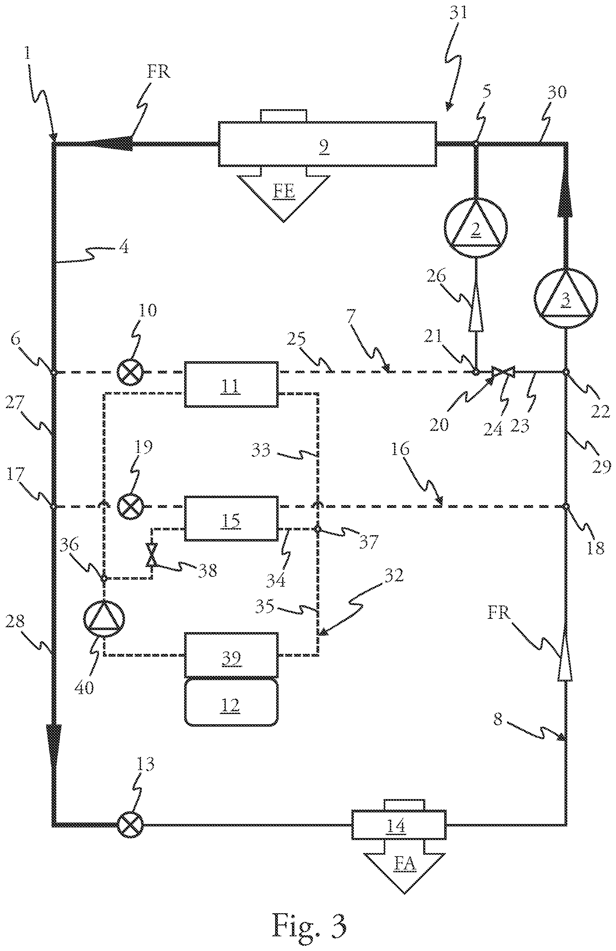

La figure 2 et la figure 3 montrent le circuit 1 selon le premier mode de réalisation dans des modes de fonctionnement dédiés au refroidissement de l'habitacle. Les besoins en refroidissement de l'habitacle sont moindres dans le mode de fonctionnement illustré en figure 2 par rapport à celui de la figure 3. Dans le cas de la figure 2, seul le deuxième dispositif de compression 3 est sollicité. Dans le cas de la figure 3, le premier dispositif de compression 2 et le deuxième dispositif de compression 3 sont sollicités.

Dans l'exemple de la figure 2, le fluide réfrigérant FR circule dans l'ensemble de la deuxième branche 8 et dans la conduite principale 4.

Dans la quatrième portion 30 de la deuxième branche 8, le fluide réfrigérant FR est comprimé par le deuxième dispositif de compression 3. Il en sort à haute pression et haute température, et c'est dans cet état qu'il traverse le troisième point de raccordement 5 et le premier échangeur thermique 9. Le premier échangeur thermique 9 fonctionne en condenseur : il réalise un échange thermique entre le fluide réfrigérant FR et le flux d'air extérieur FE à l'habitacle du véhicule, le flux d'air extérieur FE récupérant des calories du fluide réfrigérant FR en traversant le premier échangeur thermique 9. Puis, le fluide réfrigérant FR entre dans la deuxième branche 8 via le quatrième point de raccordement 6. Le fluide réfrigérant FR ne passe pas dans la première branche 7 car le premier organe de détente 10 est fermé. Le fluide réfrigérant FR traverse le cinquième point de raccordement 17 en restant dans la deuxième branche 8 sans passer dans la troisième branche 16 du fait de la fermeture du troisième organe de détente 19. Puis le fluide réfrigérant FR se détend au niveau du deuxième organe de détente 13. Dès lors, il passe d'un état de la haute pression et de haute température à un état de basse pression et basse température. Il traverse alors le deuxième échangeur thermique 14. Le deuxième échangeur thermique 14 fonctionne en évaporateur : il réalise un échange thermique entre le fluide réfrigérant FR et le flux d'air intérieur FA destiné à l'habitacle du véhicule, le flux d'air intérieur FA transmettant des calories au fluide réfrigérant FR en traversant le deuxième échangeur thermique 14. En aval du deuxième échangeur thermique 14, le fluide réfrigérant FR traverse le sixième point de raccordement 18 et le deuxième point de raccordement 22 avant de rejoindre le deuxième dispositif de compression 3 pour terminer son cycle thermodynamique.

Le fluide réfrigérant FR ne circule pas dans la première branche 7 du fait de la fermeture du premier organe de détente 10 et de la fermeture du dispositif de raccordement avec fonction d'arrêt 20, ni dans la troisième branche 16 du fait de la fermeture du troisième organe de détente 19. Ainsi, le premier échangeur de chaleur 11 est inopérant, tout comme le deuxième échangeur de chaleur 15 et le premier dispositif de compression 2.

Dans la boucle 32 de liquide caloporteur LC, le liquide caloporteur LC n'est pas mis en circulation par le dispositif de mise en circulation 40, le premier échangeur de chaleur 11 et le deuxième échangeur de chaleur 15 étant inopérants et dans le circuit 1 de fluide réfrigérant FR et dans la boucle 32 de liquide caloporteur LC.

Dans l'exemple de la figure 3, le fluide réfrigérant FR circule comme décrit dans la figure 2 au sein de la conduite principale 4, de la deuxième branche 8 et de la troisième branche 16. Le lecteur pourra se reporter à la description de la figure 2 pour la compréhension et la mise en œuvre de ce circuit 1. Il en est de même pour la boucle 32 de liquide caloporteur LC. La circulation au sein de la première branche 7 se distingue de ce qui a été précédemment décrit par la circulation partielle du fluide réfrigérant FR.

Au niveau du deuxième point de raccordement 22, l'ouverture du dispositif de raccordement avec fonction d'arrêt 20 permet au fluide réfrigérant FR de circuler dans la deuxième partie 26 de la première branche 7. Il n'y a cependant pas de circulation dans la première partie 25 de la première branche 7 du fait de la fermeture du premier organe de détente 10. Ainsi, au deuxième point de raccordement 22, le fluide réfrigérant FR se divise, aspiré d'une part par le premier dispositif de compression 2 dans la première branche 7, et d'autre part par le deuxième dispositif de compression 3 dans la deuxième branche 8. Le fluide réfrigérant FR est ainsi comprimé par le premier dispositif de compression 2 d'une part, et par le deuxième dispositif de compression 3 d'autre part. Le fluide réfrigérant FR à haute pression et haute température en aval du premier dispositif de compression 2 et du deuxième dispositif de compression 3, et converge au niveau du troisième point de raccordement 5.

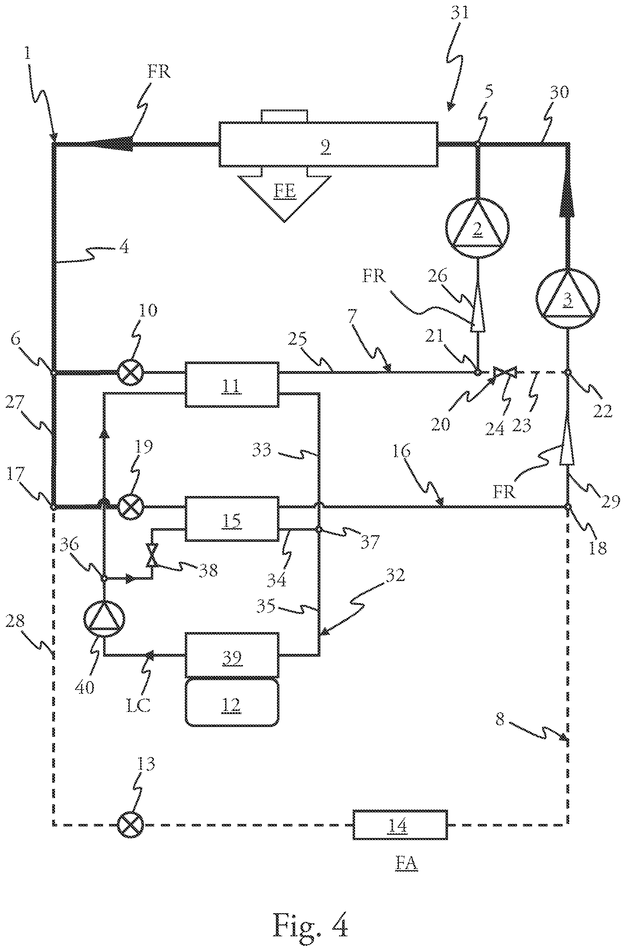

La figure 4 montre le circuit 1 de fluide réfrigérant FR selon le premier mode de réalisation, dans un mode de fonctionnement dédié au refroidissement de l'élément 12 de la chaîne de traction électrique du véhicule. Dans ce mode de fonctionnement, le premier échangeur de chaleur 11 et le premier dispositif de compression 2 fonctionnent en parallèle du deuxième échangeur de chaleur 15 et du deuxième dispositif de compression 3. La puissance de refroidissement demandée pour l'élément 12 de la chaîne de traction électrique du véhicule est forte. C'est par exemple le cas lorsque ledit élément 12 est un dispositif de stockage électrique soumis à une charge rapide. Chacun des deux échangeurs de chaleur 11, 15 dispose de son propre dispositif de compression 2, 3, ce qui permet de paralléliser les débits de fluide réfrigérant FR et de limiter les pertes de charge en sortie de chacun des échangeurs de chaleur 11, 15.

Dans l'exemple de la figure 4, le fluide réfrigérant FR circule dans la conduite principale 4, la première branche 7 et la troisième branche 16. Il circule partiellement dans la deuxième branche 8.

Dans la deuxième partie 26 de la première branche 7, le fluide réfrigérant FR est comprimé par le premier dispositif de compression 2. Dans la quatrième portion 30 de la deuxième branche 8, le fluide réfrigérant FR est comprimé par le deuxième dispositif de compression 3. Le fluide réfrigérant FR sort du premier dispositif de compression 2 et du deuxième dispositif de compression 3 à haute pression et haute température, et c'est dans cet état qu'il converge vers le troisième point de raccordement 5.

Le fluide réfrigérant FR circule dans la conduite principale 4 comme décrit dans la figure 2, à laquelle on peut se reporter pour la mise en œuvre dudit circuit 1 et la compréhension de son fonctionnement.

Au quatrième point de raccordement 6, le fluide réfrigérant FR diverge d'une part dans la première branche 7 et d'autre part dans la deuxième branche 8. La première branche 7 est parcourue dans son intégralité par le fluide réfrigérant FR. La deuxième branche 8 est parcourue partiellement par le fluide réfrigérant FR.

Dans la première branche 7, le premier organe de détente 10 détend le fluide réfrigérant FR pour le faire passer de la haute pression à la basse pression et de la haute température à la basse température. Il traverse le premier échangeur de chaleur 11 avant de rejoindre le premier point de raccordement 21. Dans le premier échangeur de chaleur 11, le fluide réfrigérant FR refroidi le liquide caloporteur LC. Passé le premier point de raccordement 21, le fluide réfrigérant FR emprunte la deuxième partie 26 de la première branche 7 pour rejoindre le premier dispositif de compression 2 et terminer son cycle thermodynamique dans la première branche 7.

Dans la troisième branche 16, le troisième organe de détente 19 détend le fluide réfrigérant FR qui passe en basse pression et basse température avant de traverser le deuxième échangeur de chaleur 15. Dans le deuxième échangeur de chaleur 15, le fluide réfrigérant FR refroidi le liquide caloporteur LC. Puis le fluide réfrigérant FR traverse successivement le sixième point de raccordement 18, la troisième portion 29, la deuxième branche 8, le deuxième point de raccordement 22, aspiré par le deuxième dispositif de compression 3 où il termine son cycle thermodynamique dans la quatrième portion 30 de la deuxième branche 8.

Le fluide réfrigérant FR ne circule pas dans la deuxième portion 28 de la deuxième branche 8 du fait de la fermeture du deuxième organe de détente 13. Dès lors, le deuxième échangeur thermique 14 est inopérant. Le fluide réfrigérant FR ne circule pas entre le deuxième point de raccordement 22 et le premier point de raccordement 21 puisque le dispositif de raccordement avec fonction d'arrêt 20 est fermé. L'état du fluide réfrigérant FR entrant dans le deuxième dispositif de compression 3 dépend du deuxième échangeur de chaleur 15 et non du deuxième échangeur thermique 14.

Dans la boucle 32 de liquide caloporteur LC, le liquide caloporteur LC est mis en circulation par le dispositif de mise en circulation 40. La circulation du liquide caloporteur LC se fait dans toute la boucle 32 de liquide caloporteur LC, le système d'arrêt 38 dans le deuxième conduit 34 étant ouvert. Depuis le dispositif de mise en circulation 40, le liquide caloporteur LC rejoint le premier point de jonction 36. Le liquide caloporteur LC se divise et parcourt d'une part le premier conduit 33 et d'autre part le deuxième conduit 34, le système d'arrêt 38 du deuxième conduit 34 étant ouvert. Puis le liquide caloporteur LC issu du premier conduit 33 et du deuxième conduit 34 converge dans le troisième conduit 35 au niveau du deuxième point de jonction 37.

Dans le premier conduit 33, le liquide caloporteur LC transfert ses calories au fluide réfrigérant FR au niveau du premier échangeur de chaleur 11. Dans le deuxième conduit 34, le liquide caloporteur LC traverse le système d'arrêt 38 ouvert puis transfert ses calories au fluide réfrigérant FR au niveau du deuxième échangeur de chaleur 15. Ces transferts thermiques visent à refroidir efficacement l'élément 12 de la chaîne de traction électrique du véhicule.

Passé le deuxième point de jonction 37, le liquide caloporteur LC traverse le troisième échangeur thermique 39. A ce niveau, l'élément 12 de la chaîne de traction électrique du véhicule au contact du troisième échangeur thermique 39 est refroidi par convection et conduction, le troisième échangeur thermique 39 permettant un transfert thermique entre cet élément 12 et le liquide caloporteur LC.

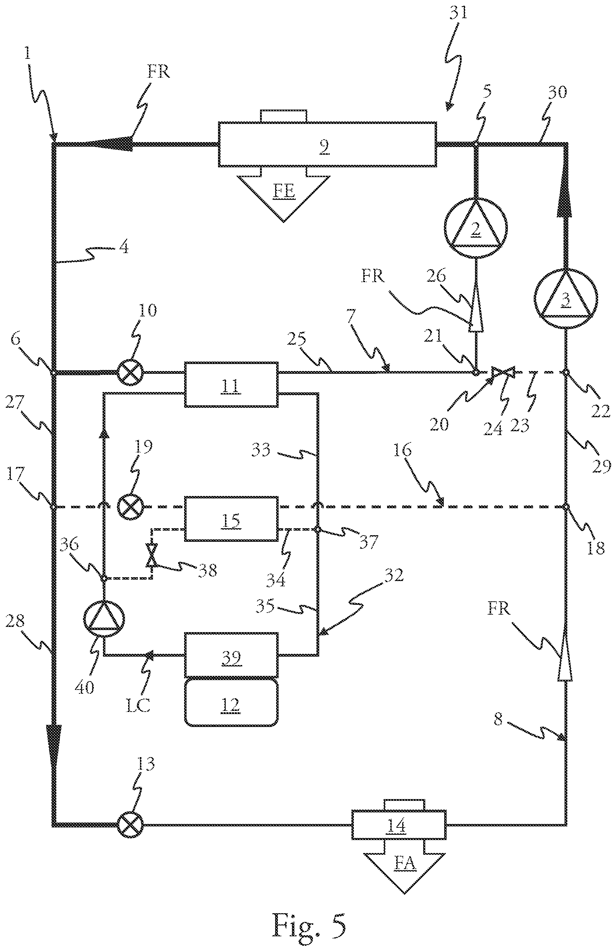

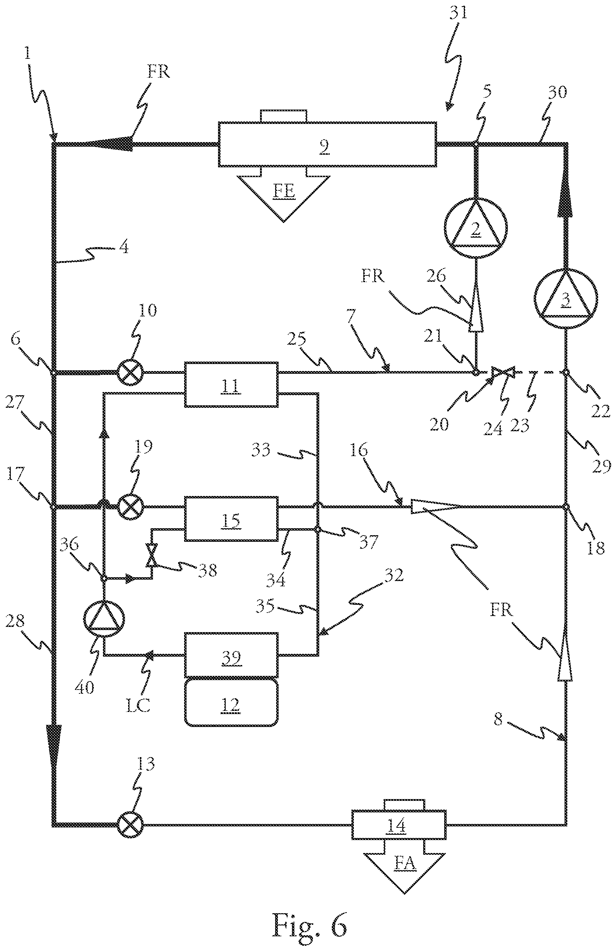

La figure 5 et la figure 6 montrent le circuit 1 selon le premier mode de réalisation dans des modes de fonctionnement permettant de refroidir simultanément l'habitacle et l'élément 12 de la chaîne de traction électrique du véhicule. Dans le cas de la figure 5, une faible puissance de refroidissement est demandée : seul le premier échangeur de chaleur 11 est sollicité et non le deuxième échangeur de chaleur 15, de sorte à ce que le deuxième dispositif de compression 3 n'aspire que du fluide réfrigérant FR en provenance du deuxième échangeur thermique 14. Dans le cas de la figure 6, la puissance de refroidissement demandée est plus forte : le premier échangeur de chaleur 11 et le deuxième échangeur de chaleur 15 sont sollicités, de sorte à ce que le deuxième dispositif de compression 3 n'aspire que du fluide réfrigérant FR en provenance du deuxième échangeur thermique 14 et du deuxième échangeur de chaleur 15.

Dans l'exemple de la figure 5, le fluide réfrigérant FR circule dans la conduite principale 4, la première branche 7 et la deuxième branche 8. Il circule ne circule pas dans la troisième branche 16 du fait de la fermeture du troisième organe de détente 19. De ce fait, le deuxième échangeur de chaleur 15 est inopérant. Il n'y a pas de circulation entre le deuxième point de raccordement 22 et le premier point de raccordement 21, le dispositif de raccordement avec fonction d'arrêt 20 étant fermé.

La circulation dans la conduite principal 4 et dans la deuxième branche 8 est telle que décrite dans la figure 2. La circulation dans la première branche 7 est telle que décrite dans la figure 4. On pourra ainsi se reporter à la description de la figure 2 et de la figure 4 pour la compréhension et la mise en œuvre du circuit 1 de fluide réfrigérant FR illustré en figure 5.

Dans la boucle 32 de liquide caloporteur LC, le liquide caloporteur LC est mis en circulation par le dispositif de mise en circulation 40. La circulation du liquide caloporteur LC se fait dans le premier conduit 33 et le troisième conduit 35 de la boucle 32 de liquide caloporteur LC, le système d'arrêt 38 dans le deuxième conduit 34 étant fermé. Le deuxième échangeur de chaleur 15 est donc inopérant dans la boucle 32 de liquide caloporteur LC tout comme dans le circuit 1 de fluide réfrigérant FR. La puissance de refroidissement est uniquement dispensée sur la boucle 32 par le premier échangeur de chaleur 11.

Pour la circulation du liquide caloporteur LC dans le premier conduit 33 et dans le deuxième conduit 34, le lecteur pourra se reporter à la description qui en est faite pour la figure 4.

Dans l'exemple de la figure 6, le fluide réfrigérant FR circule dans tout le circuit 1 de fluide réfrigérant FR, si ce n'est entre le deuxième point de raccordement 22 et le premier point de raccordement 21, le dispositif de raccordement avec fonction d'arrêt 20 étant fermé. Pour la circulation du fluide réfrigérant FR dans la conduite principale 4 et dans la deuxième branche 8, le lecteur peut se référer à la description faite pour la figure 2. Pour la circulation du fluide réfrigérant FR dans la première et la troisième branche 16, le lecteur peut se référer à la description faite pour la figure 4.

Dans la boucle 32 de liquide caloporteur LC, le liquide caloporteur LC circule dans toute la boucle 32 de liquide caloporteur LC, le système d'arrêt 38 dans le deuxième conduit 34 étant ouvert. Pour la circulation du liquide caloporteur LC dans la boucle 32 de liquide caloporteur LC, le lecteur peut se référer à la description qui est en est faite en figure 4.

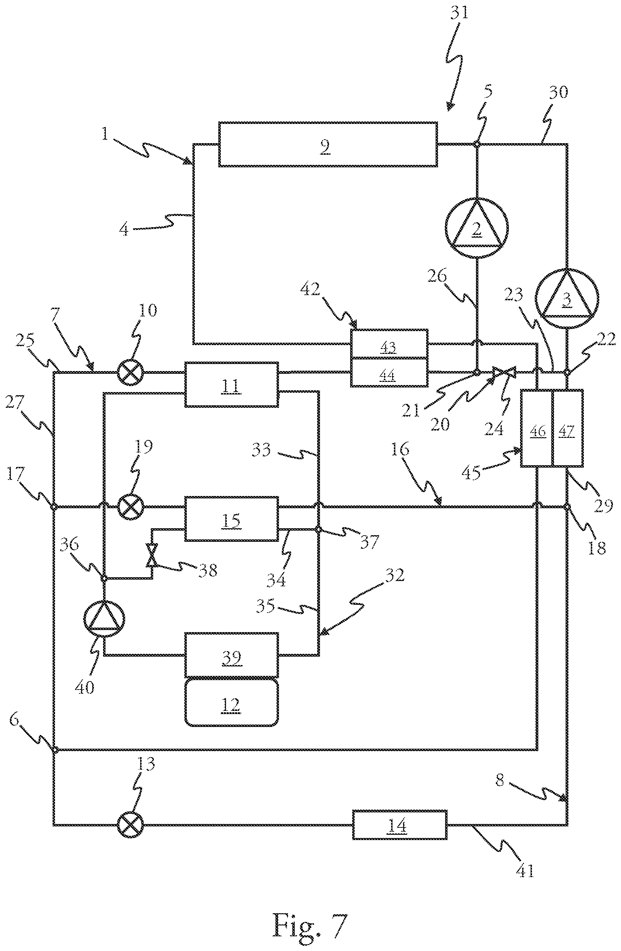

La figure 7 montre le circuit 1 selon un deuxième mode de réalisation. Le deuxième mode de réalisation est similaire au premier mode de réalisation, à l'exception des points ci-après décrits. Pour les autres aspects, on pourra se reporter à la description faite de la figure 1 pour la mise en œuvre et la compréhension du deuxième mode de réalisation.

Dans le deuxième mode de réalisation, la troisième branche 16 est raccordée différemment par rapport au premier mode de réalisation. En effet, le cinquième point de raccordement 17 est positionné, dans le deuxième mode de réalisation, sur la première branche 7. Plus particulièrement, le cinquième point de raccordement 17 est disposé dans la première partie 25 de la première branche 7. Le cinquième point de raccordement 17 se situe entre le premier organe de détente 10 et le quatrième point de raccordement 6. Le cinquième point de raccordement 17 n'étant pas positionné dans la deuxième branche 8 comme c'est le cas dans le premier mode de réalisation, la deuxième branche 8 ne dispose pas d'une première portion 27 et d'une deuxième portion 28. Elle comprend en revanche une cinquième portion 41 délimitée par le quatrième point de raccordement 6 et le sixième point de raccordement 18, et comporte également la troisième portion 29 et la quatrième portion 30.

Dans le deuxième mode de réalisation, le circuit 1 de fluide réfrigérant comprend un premier échangeur de chaleur interne 42 à deux passes 43, 44 et un deuxième échangeur de chaleur interne 45 à deux passes 46, 47. Le premier échangeur de chaleur interne 42 réalise un échange thermique entre le fluide réfrigérant circulant dans la conduite principale 4 et le même fluide réfrigérant, mais dans un état différent, circulant dans la première branche 7. Le deuxième échangeur de chaleur interne 45 réalise un échange thermique entre le fluide réfrigérant circulant dans la conduite principale 4 et le même fluide réfrigérant, mais dans un état différent, circulant dans la deuxième branche 8.

Une première passe 43 du premier échangeur de chaleur interne 42 est en série d'une première passe 46 du deuxième échangeur de chaleur interne 45. La première passe 43 du premier échangeur de chaleur interne 42 et la première passe 43 du premier échangeur de chaleur interne 42 sont disposées entre le premier échangeur thermique 9 et le quatrième point de raccordement 6.

Une deuxième passe 44 du premier échangeur de chaleur interne 42 est située entre le premier échangeur de chaleur 11 et le premier point de raccordement 21.

Une deuxième passe 47 du deuxième échangeur de chaleur interne 45 est située entre le deuxième échangeur thermique 14 et le deuxième point de raccordement 22. Plus précisément, la deuxième passe 47 du deuxième échangeur de chaleur interne 45 est située entre le sixième point de raccordement 18 et le deuxième point de raccordement 22.

Ainsi, pour le deuxième mode de réalisation et dans la conduite principale 4, on retrouve disposés en série, dans le sens de circulation du fluide réfrigérant : le troisième point de raccordement 5, le premier échangeur thermique 9, la première passe 43 du premier échangeur de chaleur interne 42, la première passe 46 du deuxième échangeur de chaleur interne 45 et le quatrième point de raccordement 6.

Pour le deuxième mode de réalisation et dans la première partie 25 de la première branche 7, on retrouve disposés en série, dans le sens de circulation du fluide réfrigérant : le quatrième point de raccordement 6, le cinquième point de raccordement 17, le premier organe de détente 10, le premier échangeur de chaleur 11, la deuxième passe 44 du premier échangeur de chaleur interne 42 et le premier point de raccordement 21.

Enfin, pour le deuxième mode de réalisation et dans la deuxième branche 8, on retrouve disposés en série, dans le sens de circulation du fluide réfrigérant : le quatrième point de raccordement 6, le deuxième organe de détente 13, le deuxième échangeur thermique 14, le sixième point de raccordement 18, la deuxième passe 47 du deuxième échangeur de chaleur interne 45, le deuxième point de raccordement 22, le deuxième dispositif de compression 3 et le troisième point de raccordement 5.

Concernant la boucle 32 de liquide caloporteur, elle est de configuration identique à ce qui a pu être décrit pour la figure 1.

On comprend de ce qui précède que la présente invention permet ainsi d'assurer simplement, sans excès de consommation et à un niveau sonore réduit, le traitement thermique par refroidissement, d'un élément d'une chaîne de traction électrique d'un véhicule, tel qu'un dispositif de stockage électrique configuré pour fournir une énergie électrique à un moteur électrique d'entraînement du véhicule, ainsi que le traitement thermique d'un habitacle par refroidissement d'un flux d'air intérieur envoyé dans l'habitacle.

L'invention ne saurait toutefois se limiter aux moyens et configurations décrits et illustrés ici, et elle s'étend également à tous moyens ou configurations équivalentes et à toute combinaison techniquement opérant de tels moyens, dans le cadre défini par les revendications. En particulier, l'architecture du circuit de fluide réfrigérant peut être modifiée sans nuire à l'invention dans la mesure où il remplit *in fine* les fonctionnalités décrites dans le présent document, et dans la mesure où ledit circuit reste dans le cadre défini par les revendications.

## Revendications

1. Circuit (1) de fluide réfrigérant (FR) pour véhicule, le circuit (1) comprenant une conduite principale (4), une première branche (7) et une deuxième branche (8), la première branche (7) et la deuxième branche (8) étant disposées en parallèle l'une par rapport à l'autre en étant disposées chacune en série de la conduite principale (4), la conduite principale (4) comprenant au moins un premier échangeur thermique (9) configuré pour être traversé par un flux d'air extérieur (FE) à un habitacle du véhicule, la première branche (7) comprenant au moins un premier organe de détente (10), un premier échangeur de chaleur (11) configuré pour traiter thermiquement au moins un élément (12) d'une chaîne de traction électrique du véhicule et un premier dispositif de compression (2), la deuxième branche (8) comprenant au moins un deuxième organe de détente (13), un deuxième échangeur thermique (14) configuré pour traiter thermiquement un flux d'air intérieur (FA) destiné à être envoyé dans l'habitacle du véhicule et un deuxième dispositif de compression (3) indépendant du premier dispositif de compression (2), **caractérisé en ce que** le circuit (1) comprend un deuxième échangeur de chaleur (15) configuré pour traiter thermiquement l'élément (12) de la chaîne de traction électrique du véhicule, le deuxième échangeur de chaleur (15) étant disposé en parallèle du deuxième échangeur thermique (14).

2. Circuit (1) selon la revendication 1, dans lequel une troisième branche (16) comprend le deuxième échangeur de chaleur (15) et un troisième organe de détente (19) disposé en parallèle du deuxième organe de détente (13).

3. Circuit (1) selon l'une quelconque des revendications précédentes, dans lequel un dispositif de raccordement avec fonction d'arrêt (20) raccorde un premier point de raccordement (21) à un deuxième point de raccordement (22), le premier point de raccordement (21) étant situé dans la première branche (7) entre le premier échangeur de chaleur (11) et le premier dispositif de compression (2) et le deuxième point de raccordement (22) étant situé dans la deuxième branche (8) entre le deuxième échangeur thermique (14) et le deuxième dispositif de compression (3).

4. Circuit (1) selon l'une quelconque des revendications 2 à 3, dans lequel la conduite principale (4) s'étend entre un troisième point de raccordement (5) et un quatrième point de raccordement (6), la troisième branche (16) s'étend entre un cinquième point de raccordement (17) et un sixième point de raccordement (18), le cinquième point de raccordement (17) est situé entre le quatrième point de raccordement (6) et le deuxième organe de détente (13) et le sixième point de raccordement (18) est situé entre le deuxième point de raccordement (22) et le deuxième échangeur thermique (14).

5. Circuit (1) selon l'une quelconque des revendications 2 à 3, dans lequel la conduite principale (4) s'étend entre un troisième point de raccordement (5) et un quatrième point de raccordement (6), un cinquième point de raccordement (17) est situé entre le quatrième point de raccordement (6) et le premier organe de détente (10) et un sixième point de raccordement (18) est situé entre le deuxième point de raccordement (22) et le deuxième échangeur thermique (14).

6. Circuit (1) selon l'une quelconque des revendications 4 ou 5, comprenant un premier échangeur de chaleur interne (42) à deux passes (43, 44) et un deuxième échangeur de chaleur interne (45) à deux passes (46, 47), une première passe (42) du premier échangeur de chaleur interne (42) étant en série d'une première passe (46) du deuxième échangeur de chaleur interne (45) et disposées entre le premier échangeur thermique (9) et le quatrième point de raccordement (6), une deuxième passe (44) du premier échangeur de chaleur interne (42) étant située entre le premier échangeur de chaleur (11) et le premier point de raccordement (21), une deuxième passe (47) du deuxième échangeur de chaleur interne (45) étant située entre le deuxième échangeur thermique (14) et le deuxième point de raccordement (22).

7. Circuit (1) selon l'une quelconque des revendications précédentes, dans lequel le premier échangeur de chaleur (11) et le deuxième échangeur de chaleur (15) sont de performance thermique équivalente.

8. Circuit (1) selon l'une quelconque des revendications 1 à 6, dans lequel le deuxième échangeur de chaleur (15) a une performance thermique plus faible que la performance thermique du premier échangeur de chaleur (11).

9. Système de traitement thermique (31) d'un véhicule comprenant un circuit (1) de fluide réfrigérant (FR) selon l'une quelconque des revendications précédentes et une boucle (32) de liquide caloporteur (LC) couplée thermiquement au circuit (1) de fluide réfrigérant (FR) par l'intermédiaire au moins du premier échangeur de chaleur (11) et du deuxième échangeur de chaleur (15).

10. Système de traitement thermique (31) selon la revendication précédente, dans lequel la boucle (32) de liquide caloporteur (LC) comprend un troisième échangeur thermique (39) qui couple thermiquement le liquide caloporteur (LC) à l'élément (12) de la chaîne de traction électrique du véhicule.

11. Système de traitement thermique (31) selon la revendication précédente, dans lequel le premier échangeur de chaleur (11) et le deuxième échangeur de chaleur (15) sont disposés en parallèle l'un par rapport à l'autre sur la boucle (32) de liquide caloporteur (LC).

## Patentansprüche

1. Kreislauf (1) eines Kältemittels (FR) für ein Fahrzeug, wobei der Kreislauf (1) eine Hauptleitung (4), einen ersten Zweig (7) und einen zweiten Zweig (8) umfasst, wobei der erste Zweig (7) und der zweite Zweig (8) parallel zueinander angeordnet sind und dabei jeweils in Reihe mit der Hauptleitung (4) angeordnet sind, wobei die Hauptleitung (4) wenigstens einen ersten Wärmeübertrager (9) umfasst, der dafür ausgelegt ist, von einem Strom von von außerhalb eines Innenraumes des Fahrzeugs kommender Luft (FE) durchströmt zu werden, wobei der erste Zweig (7) wenigstens ein erstes Expansionsorgan (10), einen ersten Wärmetauscher (11), der dafür ausgelegt ist, wenigstens ein Element (12) eines elektrischen Antriebsstranges des Fahrzeugs thermisch zu behandeln, und eine erste Verdichtungsvorrichtung (2) umfasst, wobei der zweite Zweig (8) wenigstens ein zweites Expansionsorgan (13), einen zweiten Wärmeübertrager (14), der dafür ausgelegt ist, einen Innenluftstrom (FA), der dazu bestimmt ist, in den Innenraum des Fahrzeugs eingeleitet zu werden, thermisch zu behandeln, und eine von der ersten Verdichtungsvorrichtung (2) unabhängige zweite Verdichtungsvorrichtung (3) umfasst, **dadurch gekennzeichnet, dass** der Kreislauf (1) einen zweiten Wärmetauscher (15) umfasst, der dafür ausgelegt ist, das Element (12) des elektrischen Antriebsstranges des Fahrzeugs thermisch zu behandeln, wobei der zweite Wärmetauscher (15) zu dem zweiten Wärmeübertrager (14) parallel angeordnet ist.

2. Kreislauf (1) nach Anspruch 1, wobei ein dritter Zweig (16) den zweiten Wärmetauscher (15) und ein zu dem zweiten Expansionsorgan (13) parallel angeordnetes drittes Expansionsorgan (19) umfasst.

3. Kreislauf (1) nach einem der vorhergehenden Ansprüche, wobei eine Verbindungsvorrichtung mit Absperrfunktion (20) einen ersten Anschlusspunkt (21) mit einem zweiten Anschlusspunkt (22) verbindet, wobei sich der erste Anschlusspunkt (21) im ersten Zweig (7) zwischen dem ersten Wärmetauscher (11) und der ersten Verdichtungsvorrichtung (2) befindet und der zweite Anschlusspunkt (22) sich im zweiten Zweig (8) zwischen dem zweiten Wärmeübertrager (14) und der zweiten Verdichtungsvorrichtung (3) befindet.

4. Kreislauf (1) nach einem der Ansprüche 2 bis 3, wobei sich die Hauptleitung (4) zwischen einem dritten Anschlusspunkt (5) und einem vierten Anschlusspunkt (6) erstreckt, der dritte Zweig (16) sich zwischen einem fünften Anschlusspunkt (17) und einem sechsten Anschlusspunkt (18) erstreckt, der fünfte Anschlusspunkt (17) sich zwischen dem vierten Anschlusspunkt (6) und dem zweiten Expansionsorgan (13) befindet und der sechste Anschlusspunkt (18) sich zwischen dem zweiten Anschlusspunkt (22) und dem zweiten Wärmeübertrager (14) befindet.

5. Kreislauf (1) nach einem der Ansprüche 2 bis 3, wobei sich die Hauptleitung (4) zwischen einem dritten Anschlusspunkt (5) und einem vierten Anschlusspunkt (6) erstreckt, ein fünfter Anschlusspunkt (17) sich zwischen dem vierten Anschlusspunkt (6) und dem ersten Expansionsorgan (10) befindet und ein sechster Anschlusspunkt (18) sich zwischen dem zweiten Anschlusspunkt (22) und dem zweiten Wärmeübertrager (14) befindet.

6. Kreislauf (1) nach einem der Ansprüche 4 oder 5, welcher einen ersten inneren Wärmetauscher (42) mit zwei Passagen (43, 44) und einen zweiten inneren Wärmetauscher (45) mit zwei Passagen (46, 47) umfasst, wobei eine erste Passage (42) des ersten inneren Wärmetauschers (42) in Reihe mit einer ersten Passage (46) des zweiten inneren Wärmetauschers (45) angeordnet ist und diese Passagen zwischen dem ersten Wärmeübertrager (9) und dem vierten Anschlusspunkt (6) angeordnet sind, eine zweite Passage (44) des ersten inneren Wärmetauschers (42) sich zwischen dem ersten Wärmetauscher (11) und dem ersten Anschlusspunkt (21) befindet und eine zweite Passage (47) des zweiten inneren Wärmetauschers (45) sich zwischen dem zweiten Wärmeübertrager (14) und dem zweiten Anschlusspunkt (22) befindet.

7. Kreislauf (1) nach einem der vorhergehenden Ansprüche, wobei der erste Wärmetauscher (11) und der zweite Wärmetauscher (15) eine äquivalente thermische Leistung aufweisen.

8. Kreislauf (1) nach einem der Ansprüche 1 bis 6, wobei der zweite Wärmetauscher (15) eine thermische Leistung aufweist, die kleiner als die thermische Leistung des ersten Wärmetauschers (11) ist.

9. Wärmebehandlungssystem (31) eines Fahrzeugs, welches einen Kreislauf (1) eines Kältemittels (FR) nach einem der vorhergehenden Ansprüche und eine Schleife (32) einer Wärmeträgerflüssigkeit (LC), die mit dem Kreislauf (1) des Kältemittels (FR) über wenigstens den ersten Wärmetauscher (11) und den zweiten Wärmetauscher (15) thermisch gekoppelt ist, umfasst.

10. Wärmebehandlungssystem (31) nach dem vorhergehenden Anspruch, wobei die Schleife (32) der Wärmeträgerflüssigkeit (LC) einen dritten Wärmeübertrager (39) umfasst, welcher die Wärmeträgerflüssigkeit (LC) mit dem Element (12) des elektrischen Antriebsstranges des Fahrzeugs thermisch koppelt.

11. Wärmebehandlungssystem (31) nach dem vorhergehenden Anspruch, wobei der erste Wärmetauscher (11) und der zweite Wärmetauscher (15) parallel zueinander auf der Schleife (32) der Wärmeträgerflüssigkeit (LC) angeordnet sind.

## Claims

1. Circuit (1) for refrigerant (FR) for a vehicle, the circuit (1) comprising a main duct (4), a first branch (7) and a second branch (8), the first branch (7) and the second branch (8) being arranged in parallel with respect to one another, being each arranged in series with the main duct (4), the main duct (4) comprising at least a first thermal exchanger (9) configured to be traversed by an exterior air flow (FE) to a cabin of the vehicle, the first branch (7) comprising at least a first expansion member (10), a first heat exchanger (11) configured to thermally treat at least one element (12) of an electric powertrain of the vehicle and a first compression device (2), the second branch (8) comprising at least a second expansion member (13), a second thermal exchanger (14) configured to thermally treat an interior air flow (FA) intended to be sent into the cabin of the vehicle and a second compression device (3) independent of the first compression device (2), **characterized in that** the circuit (1) comprises a second heat exchanger (15) configured to thermally treat the element (12) of the electric powertrain of the vehicle, the second heat exchanger (15) being arranged in parallel with the second thermal exchanger (14).

2. Circuit (1) according to Claim 1, in which a third branch (16) comprises the second heat exchanger (15) and a third expansion member (19) arranged in parallel with the second expansion member (13).

3. Circuit (1) according to either one of the preceding claims, in which a connection device with a stop function (20) connects a first connection point (21) to a second connection point (22), the first connection point (21) being located in the first branch (7) between the first heat exchanger (11) and the first compression device (2) and the second connection point (22) being located in the second branch (8) between the second thermal exchanger (14) and the second compression device (3).

4. Circuit (1) according to either one of Claims 2 and 3, in which the main duct (4) extends between a third connection point (5) and a fourth connection point (6), the third branch (16) extends between a fifth connection point (17) and a sixth connection point (18), the fifth connection point (17) is located between the fourth connection point (6) and the second expansion member (13) and the sixth connection point (18) is located between the second connection point (22) and the second thermal exchanger (14).

5. Circuit (1) according to either one of Claims 2 and 3, in which the main duct (4) extends between a third connection point (5) and a fourth connection point (6), a fifth connection point (17) is located between the fourth connection point (6) and the first expansion member (10) and a sixth connection point (18) is located between the second connection point (22) and the second thermal exchanger (14).

6. Circuit (1) according to either one of Claims 4 and 5, comprising a first internal heat exchanger (42) with two passes (43, 44)and a second internal heat exchanger (45) with two passes (46, 47), a first pass (42) of the first internal heat exchanger (42) being in series with a first pass (46) of the second internal heat exchanger (45) and arranged between the first thermal exchanger (9) and the fourth connection point (6), a second pass (44) of the first internal heat exchanger (42) being located between the first heat exchanger (11) and the first connection point (21), a second pass (47) of the second internal heat exchanger (45) being located between the second thermal exchanger (14) and the second connection point (22).

7. Circuit (1) according to any one of the preceding claims, in which the first heat exchanger (11) and the second heat exchanger (15) are of equivalent thermal performance.

8. Circuit (1) according to any one of Claims 1 to 6, in which the second heat exchanger (15) has a thermal performance lower than the thermal performance of the first heat exchanger (11).

9. Vehicle thermal treatment system (31) comprising a circuit (1) for refrigerant (FR) according to any one of the preceding claims and a loop (32) for heat transfer liquid (LC) thermally coupled to the circuit (1) for refrigerant (FR) via at least the first heat exchanger (11) and the second heat exchanger (15).

10. Thermal treatment system (31) according to the preceding claim, in which the loop (32) for heat transfer liquid (LC) comprises a third thermal exchanger (39) which thermally couples the heat transfer liquid (LC) to the element (12) of the electric powertrain of the vehicle.

11. Thermal treatment system (31) according to the preceding claim, in which the first heat exchanger (11) and the second heat exchanger (15) are arranged in parallel with respect to each other on the loop (32) for heat transfer liquid (LC).
